# EUROPÄISCHE PATENTSCHRIFT

(11) **EP 3 237 849 B1**
(45) Veröffentlichungstag und Bekanntmachung des Hinweises auf die Patenterteilung: **05.02.2020**
(21) Anmeldenummer: 15807934.3
(22) Anmeldetag: 10.12.2015
(51) Int. Cl.: G01F 1/58, G01F 1/60

(54) **VERFAHREN ZUR DEFEKTERKENNUNG DER SIGNALLEITUNG ZWISCHEN EINER ELEKTRODE UND EINER MESS- UND/ODER AUSWERTEEINHEIT EINES MAGNETISCH-INDUKTIVEN DURCHFLUSSMESSGERÄTES**
METHOD FOR FAULT DETECTION OF THE SIGNAL LINE BETWEEN AN ELECTRODE AND A MEASURING AND/OR EVALUATION UNIT OF A MAGNETIC-INDUCTIVE FLOW METER
PROCÉDÉ DE DÉTECTION DE DEFAUT DE LA LIGNE DE SIGNAL ENTRE UNE ÉLECTRODE ET UN DISPOSITIF DE MESURE ET/OU D'ÉVALUATION D'UN DÉBITMÈTRE MAGNÉTIQUE INDUCTIF

(30) Priorität: 22.12.2014 DE 102014119453
(43) Veröffentlichungstag der Anmeldung: 01.11.2017
(73) Patentinhaber: Endress+Hauser Flowtec AG, 4153 Reinach (CH)
(72) Erfinder: SPAHLINGER, Andre, 79415 Bad Bellingen (DE); RÜFENACHT, Markus, 4106 Therwil (CH); BOEGLIN, Christophe, 68480 Wolschwiller (FR)
(74) Vertreter: Andres, Angelika Maria
(86) Internationale Anmeldenummer: PCT/EP2015/079284
(87) Internationale Veröffentlichungsnummer: WO 2016/102193

(56) Entgegenhaltungen:
- DE-A1-102007 014 469
- DE-A1-102008 005 258
- GB-A- 2 333 161
- JP-A- 2012 078 280
- US-A1- 2010 122 582

## Beschreibung

Die vorliegende Erfindung betrifft ein Verfahren zur Defekterkennung der Signalleitung zwischen einer Elektrode und einer Mess- und/oder Auswerteeinheit eines magnetisch-induktiven Durchflussmessgerätes sowie ein magnetisch-induktives Durchflussmessgerät.

Aus dem Stand der Technik sind eine Reihe von Impedanzmessverfahren und deren -auswertung im Bereich der magnetisch-induktiven Durchflussmessung bekannt. Relevant in diesem Zusammenhang sind u.a. die EP 2 245 430 A2 und die DE 10 2006 033 112 A1. Üblicherweise werden die Impedanzmessungen genutzt um den Füllstand zu bestimmen oder ggf. um eine Belags- oder Korrosionsdetektion der Messelektroden durchzuführen.

Es kann im Lebenszyklus eines magnetisch-induktiven Durchflussmessgerätes in der Prozessmesstechnik allerdings vorkommen, dass einzelne Sensorbauteile ausfallen. Während Überprüfungsfunktionen und Überwachungsfunktionalitäten für Magnetsysteme oder auch für die Verbindung zwischen Magnetsystem und Transmitter bereits bekannt sind, wird eine Defektüberwachung der Signalleitung zwischen einzelnen Elektroden, insbesondere den Messelektroden, und dem Transmitter auf einen Defekt bisher nicht durchgeführt.

In der GB 2 333 161 A wird ein Verfahren offenbart, bei dem mithilfe eines an die Messelektroden angeschlossenen Kondensators und eines mittels eines Spannungsgenerators generierten Spannungsrampe ein konstanter Strom in den Messelektroden und im Medium herbeigeführt wird, mittels dem Rückschlüsse über den Zustand der Elektroden, etwaigen Ablagerungen, der Leitfähigkeit des Mediums und der Verkabelung gezogen werden können. Nachteilig an diesem Verfahren jedoch ist, dass der konstante Strom die Messung des Durchflusses stört.

Die vorliegende Erfindung setzt daher bei der Aufgabe an, den Defekt einer Signalleitung zwischen einer Elektrode und einer Mess- und/oder Auswerteeinheit in einem magnetisch-induktiven Messgerät zu erkennen.

Die vorliegende Erfindung löst diese Aufgabe durch das Bereitstellen eines Verfahrens mit den Merkmalen des Anspruchs 1.

Die vorliegende Erfindung differenziert zwischen einer Defekterkennung und einer Fehlmessung. Während eine Fehlmessung lediglich einen fehlerhaften Messwert ausgibt, geht es bei der Defekterkennung darum, dass das Gerät keine aussagefähigen Messwerte mehr liefert. Bei einer Fehlmessung kann somit noch ein fehlerbehaftetes Ergebnis ausgewertet werden, während ein Defekt kein Messwert ergibt oder einen völlig unrealistischen Messwert.

Ein Defekt liegt insbesondere bei einem Kabelbruch der Messelektrode vor. Hier erfolgt kein Spannungsabgriff mehr. Im Rahmen einer Fehlerdiagnose kann nunmehr das Messgerät überprüfen, ob der Defekt auf eine Unterbrechung der Signalleitung der Messelektrode, z.B. durch Kabelbruch oder Lösen der Lötverbindung zurückzuführen ist. Es geht bei der Defekterkennung darum, ob an zwischen den Elektroden des magnetisch-induktiven Durchflussmessgerätes und der Mess- und/oder Auswerteeinheit eine Unterbrechung vorliegt.

Erfindungsgemäß umfasst ein Verfahren zur Defekterkennung der Signalleitung zwischen einer Elektrode in einem magnetisch-induktiven Durchflussmessgerät und einer Mess-und/oder Auswerteeinheit, wobei das magnetisch-induktive Durchflussmessgerät zumindest eine Mess- und/oder Auswerteeinheit, sowie ein Messrohr mit zumindest zwei Messelektroden und einer dritte Elektrode aufweist, wobei die folgenden Schritte:
A) Ermittlung eines Verhältnisses von zumindest zwei gemessenen elektrischen Impedanzen zwischen den Messelektroden und/oder zwischen zumindest einer der beiden Messelektroden und der dritten Elektrode;
B) Vergleich des Impedanzverhältnisses gegenüber einem Sollwertbereich und
C) Ausgabe einer Defektmeldung, sofern das Impedanzverhältnis den Sollwertbereich über- oder unterschreitet.

Erfindungsgemäß ist die dritte Elektrode eine Füllstandsüberwachungslelektrode. Erfindungsgemäß erfolgt die Messung der Impedanzen gemäß Schritt A) durch Anlegen einer Spannung mit mehreren Frequenzen über einen Vorwiderstand an eine Messstrecke bestehend aus zwei der vorgenannten Elektroden. Dadurch ist keine gesonderte Stromspeisung notwendig und es wird eine unkomplizierte Messung ermöglicht.

Der Sollwertbereich richtet sich insbesondere nach der geometrischen Anordnung der Elektroden zueinander und welche Messstrecken verglichen werden. Vorteilhafte Ausgestaltungen der Erfindung sind Gegenstand der Unteransprüche.

Es ist von Vorteil, wenn der Sollwertbereich zwischen 0,2 und 5,0, insbesondere zwischen 0,5 und 2,0 liegt. Dies trifft insbesondere zu sofern die Elektrodenanordnung symmetrisch im Messrohr angeordnet ist. In diesem Sollwert kann man davon sicher ausgehen, dass Beläge auf den Elektroden oder Strömungsstörungen keine Defektmeldung auslösen.

Es ist von Vorteil, wenn die Defektmeldung auf einen Kabelbruch hinweist, sofern höchstens eine der Impedanzen gegen annähernd unendlich tendiert. Bei einem leeren Messrohr wird dadurch keine Defektmeldung signalisiert.

Es ist von Vorteil, wenn die dritte Elektrode als eine Erdungselektrode aufgebildet ist, mittels welcher ein Potentialausgleich des im Messrohr geführten Messmediums mit der Umgebung durchgeführt wird. Bei der überwiegenden Anzahl an magnetisch-induktiven Durchflussmessgeräten ist eine Erdungselektrode standardmäßig vorgesehen. Somit wird zur Umsetzung der Defektüberprüfung keine zusätzliche Messtechnik (z.B. Elektroden oder Schaltungsbauteile) benötigt.

Alternativ oder zusätzlich kann die dritte Elektrode als eine EPD-Elektrode vorteilhaft ausgebildet sein, mittels welcher die vollständige Befüllung des Messrohres mit Messmedium während der Messung überwacht wird. Die Messung über die EPD-Elektrode ist insbesondere bei Durchflussmessgeräten von Vorteil, bei welchen keine Erdungselektrode vorgesehen ist. Auch hier wird keine zusätzliche Messtechnik zur Ausführung der Defektüberprüfung benötigt.

Es ist insbesondere von Vorteil, wenn Impedanzverhältnisse aus zumindest drei Impedanzmessungen zwischen jeder der Messelektroden und der dritten Elektrode, sowie ggf. weiteren Elektroden, ermittelt und mit dem Sollwertbereich verglichen werden. Ein Kabelbruch bzw. ein Defekt kann bereits durch Ermittlung von zwei Impedanzen bei einer Anordnung aus drei Elektroden, also den Messelektroden und der dritten Elektrode, detektiert werden. Problematisch ist wenn ein Kabelbruch an der Elektrode gegeben ist, welche sowohl in die erste als auch in die zweite Impedanzmessung eingeht. Hier würden bei Kabelbruch beide gemessenen Impedanzen gegen unendlich gehen und sich bei Verhältnisbildung ausgleichen. In diesem Fall kann die Messung der dritten Impedanz der Anordnung und die anschließende Verhältnisbildung mit dieser dritten Impedanz zur Defektbildung führen.

Es ist von Vorteil, wenn das magnetisch-induktive Durchflussmessgerät eine vierte Elektrode, insbesondere eine EPD-Elektrode oder eine Erdungselektrode, aufweist. So steht dem Gerät mehr Vergleichsmessstrecken zur Verfügung um einen Kabelbruch zu überprüfen.

Das magnetisch-induktive Durchflussmessgerät kann besonders vorteilhaft zumindest zwei Messelektroden, eine EPD-Elektrode und eine Erdungselektrode aufweist und die Impedanzen zwischen allen vier vorgenannten Elektroden gemessen und durch Verhältnisbildung und Abgleich mit dem Sollwertebereich ausgewertet werden.

Ein erfindungsgemäßes magnetisch-induktives Durchflussmessgerät weist einen Betriebsmodus aufweist, welcher nach einem Verfahren gemäß Anspruch 1 arbeitet.

Nachfolgend wird die Erfindung anhand der beigefügten Figuren mittels eines Ausführungsbeispiels näher erläutert. Es zeigen:
Fig. 1 eine schematische Darstellung eines magnetisch-induktiven Durchflussmessgerätes;
Fig. 2 ein schematisches Schaltbild mit Impedanzen zwischen einzelnen Elektroden;
Fig. 3 ein erstes schematisches Schaltbild bezüglich der Verschaltung zur Ermittlung einer Impedanz zwischen zwei Elektroden;
Fig. 4 ein zweites schematisches Schaltbild bezüglich der Verschaltung zur Ermittlung einer Impedanz zwischen zwei Elektroden; und
Fig. 5 ein vereinfachtes schematisches Schaltbild bezüglich der Verschaltungsoptionen zur Ermittlung einer Impedanz zwischen einer beliebigen Elektrode und einer Erdungselektrode.

Das Messprinzip eines magnetisch-induktiven Durchflussmessgerätes ist grundsätzlich bekannt. Gemäß dem Faraday'schen Induktionsgesetz wird in einem Leiter, der sich in einem Magnetfeld bewegt, eine Spannung induziert. Beim magnetisch-induktiven Messprinzip entspricht das fließende Messmedium dem bewegten Leiter.

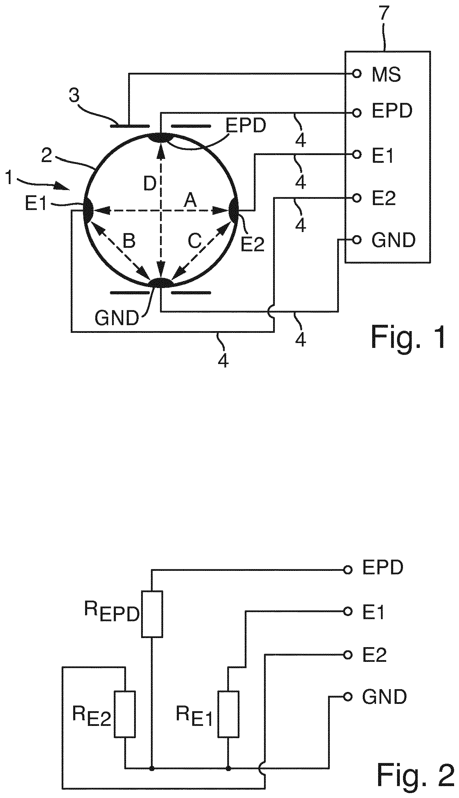

Fig. 1 zeigt den schematischen Aufbau einer bevorzugten Ausführungsvariante eines erfindungsgemäßen magnetisch-induktiven Durchflussmessgerätes 1. Es umfasst ein Messrohr 2 und zwei Feldspulen 3, welche diametral zueinander am oder im Messrohr 2 angeordnet sind und ein Magnetfeld erzeugen. Es können auch mehr als zwei magnetfelderzeugende Elemente, z.B. vier Feldspulen, vorgesehen sein.

Zudem sind am Messrohr 2 zwei sich diametral gegenüberstehende Messelektroden E1, E2 vorgesehen, welche bei einer Anordnung aus zwei Feldspulen vorzugsweise um 90° versetzt zu diesen Feldspulen am Messrohr angeordnet sind. Die Messelektroden E1, E2 greifen die beim Durchfließen des Messstoffes bzw. Messmediums erzeugte Spannung ab. Die induzierte Spannung verhält sich proportional zur Durchflussgeschwindigkeit und damit zum Volumendurchfluss. Das durch die Feldspulen 3 aufgebaute Magnetfeld wird vorzugsweise durch einen getakteten Gleichstrom wechselnder Polarität erzeugt. Dies gewährleistet einen stabilen Nullpunkt und macht die Messung unempfindlich gegenüber Einflüssen durch Mehrphasenstoffe, Inhomogenitäten in der Flüssigkeit oder geringer Leitfähigkeit.

Zusätzlich zu den beiden Messelektroden E1, E2 kann ein magnetisch-induktives Durchflussmessgerät 1 eine Erdungselektrode GND und/oder eine weitere Elektrode EPD aufweisen, welche oftmals MSÜ-Elektrode (Messstoffüberwächungselektrode), Füllstandsüberwachungselektrode oder EPD-Elektrode (Empty Pipe Detektion Electrode) genannt wird. Beide Elektroden sind aus dem Stand der Technik bekannt. Die EPD-Elektrode überwacht dabei, ob das Messrohr während der Messung vollständig gefüllt ist. Die erfolgt vorzugsweise durch eine Leitfähigkeitsmessung.

Auch das in Fig. 1 dargestellte magnetisch-induktive Durchflussmessgerät 1 weist zumindest eine EPD-Elektrode EPD zur Überwachung des Befüllungszustandes des Messrohres 2 und zumindest eine Erdungselektrode GND auf.

Es sind auch Konstruktionsvarianten eines magnetisch-induktiven Durchflussmessgerätes bekannt, in welchen nur eine EPD-Elektrode EPD oder nur eine Erdungselektrode GND eingesetzt wird. Diese sind ebenfalls durch den Gegenstand der vorliegenden Erfindung erfasst.

Die Messwerte und/oder der Zustand der einzelnen Elektroden werden von einer Mess- und/oder Auswerteeinheit 7 ausgewertet und/oder überwacht. Zwischen der Mess- und/oder Auswerteeinheit 7 den Messelektroden E1, E2, der EPD-Elektrode EPD oder der Erdungselektrode GND ist jeweils eine Kabelleitung 4 angeordnet, welche Messsignale zur Mess- und/oder Auswerteeinheit 7 übermittelt oder zu einer Drahtlos-Sendeeinheit übermittelt, welche Messsignale am die Mess- und Auswerteeinheit 7 Messsignale sendet. In allen Fällen handelt es sich um eine Signalleitung im Sinne der vorliegenden Erfindung, auch wenn ein Teil dieser Signalleitung drahtlos erfolgt.

Fig. 2 verdeutlicht in einfacher Weise die Grundidee der vorliegenden Erfindung. Die Auswertung lässt sich prinzipiell mit den zwei Messelektroden und einer beliebigen dritten Elektrode umsetzen. Bei gefülltem Messrohr können z.B. an den Messelektroden E1 und E2 und an der EPD-Elektrode die Impedanzen R_{E2}, R_{E1} und R_{EPD} gegen die Erdungselektrode GND gemessen werden. Diese Impedanzen sind u.a. abhängig vom Messmedium, von der Elektrodenform, vom Elektrodenmaterial und auch von der Messstrecke zwischen den jeweiligen Elektroden. Nicht zuletzt ist auch die geometrische Anordnung der Elektroden zu berücksichtigen.

In Fig. 1 sind mehrere Messstrecken A, B, C und D zwischen den Messelektroden, der EPD-Elektrode und der Erdungselektrode abgebildet. Symmetrisch im Sinne der vorliegenden Erfindung ist eine Elektrodenanordnung dann, wenn der kürzeste Abstand B einer Elektrode zur nächstbenachbarten Elektrode mit einem Abstand C dieser nächstbenachbarten Elektrode zu einer weiteren Elektrode betragsgleich ist.

Im weiteren Verlauf wird zur Vereinfachung nur noch von Impedanzen gesprochen, dies ist aber austauschbar mit Leitwerten zu sehen. Das Verhältnis von R_{EPD} zu R_{E1} , R_{E2} oder R_{E1} || R_{E2} ist unabhängig vom Medium aufgrund der geometrischen Anordnung der Elektroden, also der Messelektroden E₁, E₂ und der EPD-Elektrode zur Erdungselektrode GND, gegeben. Wie man in Fig. 1 erkennt, sind die Messstrecken B und C der EPD-Elektrode zu einer jeweiligen Messelektrode E1 oder E2 deutlich kleiner als der Abstand A zwischen den beiden Messelektroden E1 und E2. Das Verhältnis der Impedanzen R_{E1} zu R_{E2} also die Impedanz über die Messstrecke B und C kann zur Erkennung von einem Kabelbruch der Signalleitungen herangezogen werden. Da beide Messstrecken gleich groß sind und die Elektrodentypen ebenfalls gleich ausgestaltet sind ergibt das Verhältnis der Impedanzen R_{E1}/R_{E2} im Idealfall 1,0. Oftmals beeinflussen im Realfall jedoch Beläge auf den Elektroden, Strömungsstörungen und dergleichen das Verhältnis.

Bei einer Fehlfunktion kann die Impedanz an der fehlerhaften Elektrode sehr groß sein oder näherungsweise unendlich groß sein. Kleinere Impedanzunterschiede, welche außerhalb des vordefinierten Referenzwertes liegen, können auf Fehler durch starken Belag oder eine asymmetrische Belagserkennung auf den Elektroden hinweisen.

Da somit bei einem Kabelbruch die Impedanz R_{E1} oder R_{E2} gegen unendlich tendiert, werden auch hohe Grenzwerte für ein Impedanz-Verhältnis z.B. von 0,2 oder von 5,0 problemlos überschritten.

Wenn die Impedanzen R_{E1} zu R_{E2} nicht im für den Sensor typischen Sollwertbereich zueinander befinden liegt ein Kabelbruch vor. Das Prinzip lässt sich auch anwenden, falls die Abstände B und C nicht gleich sind.

Als Kabelbruch ist im Rahmen der Erfindung auch ein Kabelabriss, z.B. an der Lötstrecke zur entsprechenden Elektrode, zu verstehen.

Problematisch bei einem Vergleich eines Verhältnisses von lediglich zwei Impedanzen ist, dass die beiden gegenübergestellten Impedanzen durch Messstrecken von zwei Elektroden, im konkreten Fall die Messelektroden E₁ und E₂, mit einer gemeinsamen Elektrode, im konkreten Fall die Erdungselektrode GND, zurückgeführt sind. Erfolgt somit an der Signalleitung der GND-Elektrode ein Kabelbruch so ergibt das Verhältnis der Impedanzen, da beide Impedanzwerte gegen unendlich streben, wieder annähernd 1 und das Messgerät würde keinen Kabelbruch anzeigen.

Daher empfiehlt sich in einer besonders bevorzugten Ausführungsvariante eine Überprüfung des Verhältnisses der Impedanzen auf der Messstrecke A, B und C. Liegt eines der Verhältnisses der Impedanzen außerhalb des Sollwertbereichs, so liegt ein Kabelbruch vor.

Problematisch ist weiterhin, wenn ein Messrohr nur teilgefüllt ist. Hier würde auch ein Kabeldefekt angezeigt werden. Hier empfiehlt sich der Einsatz einer EPD-Elektrode, welche den Befüllungsgrad des Messrohres anzeigt. Zudem empfiehlt es sich auch eine oder mehrere Impedanzen zwischen der EPD-Elektrode und der Erdungselektrode GND oder einer oder aller Messelektroden E1, E2 ins Verhältnis zu setzen und gegenüber dem vordefinierten Sollwertbereich abzugleichen. Somit kann auch eine Verifikation auf Kabelbruch durch die EPD-Elektrode erfolgen.

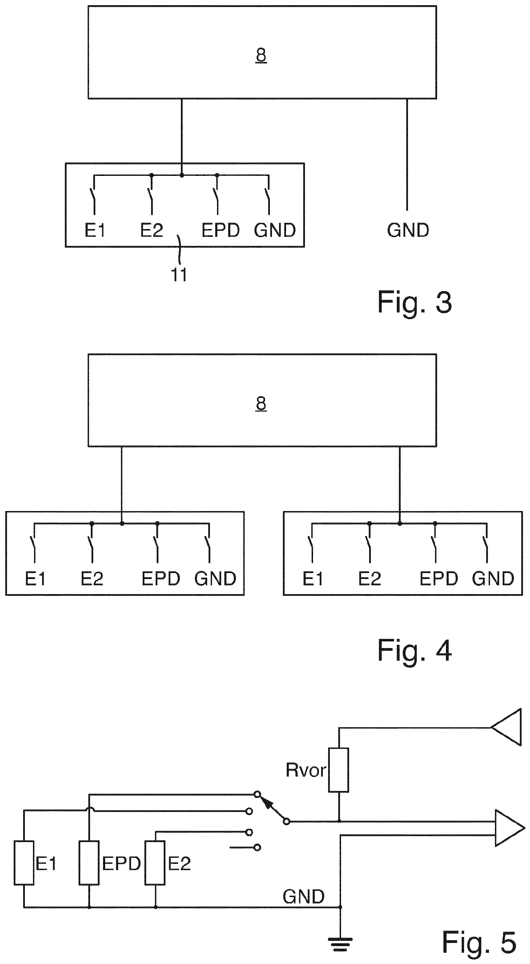

Die Bestimmung der Impedanzen übernimmt eine an-sich bekannte Schaltung der EPD-Elektrode oder der GND-Elektrode, welche in den meisten Fällen bereits im magnetisch induktiven Durchflussmessgerät bereits vorhanden ist. Gegebenenfalls benötigt diese noch Schalter, damit sie die Impedanzen an den einzelnen Elektroden messen kann. Diese Schalteranordnung ist in Fig. 3 und 4 dargestellt. Bei dieser Skizze wird davon ausgegangen das die Impedanz immer gegen das Erdpotential bestimmt wird. Dies ist aber nicht zwingend erforderlich.
Die Erfindung betrifft keine bestimmte Messschaltung, sondern in der Auswertung der meist bereits vorhandenen Messwerte bzw. der Impedanzen.

Der Vergleich der einzelnen Impedanzen dient der Erkennung ob eine Fehlfunktion der Messelektroden, der EPD-Elektrode und/oder ggf. der Erdungselektrode vorliegt. Damit kann das Gerät automatisch einen Selbsttest, ob eine Beschädigung dieser Bauelemente vorliegt. Dies kann mit der bestehenden Hardware R_{EPD} und R_{E1} ∥ R_{E2} kontinuierlich erfasst werden. Das Verhältnis R_{EPD} /(R_{E1} ∥ R_{E2}) wird mit dabei durch die Mess- und Auswerteeinheit 7 mit einem Referenzwert verglichen. Tritt eine Abweichung auf wird dies als Kabelbruch angezeigt. Da diese Detektion insbesondere mit gefülltem Messrohr funktioniert wird diese vorzugsweise nur durchgeführt wenn an der EPD Elektrode ein volles Messrohr erkannt wird.

Da die meisten magnetisch-induktiven Durchflussmessgeräte bereits mit entsprechenden Elektrodenanordnungen und Schaltungsanordnungen versehen sind, kann ein bestehendes Gerät durch ein entsprechendes Software-Update auch mit der vorbeschriebenen Funktionalität einer Elektrodenselbstkontrolle nachgerüstet werden.

In Fig. 3 ist eine Möglichkeit der Schaltung dargestellt, in welcher Impedanzen zwischen alle Elektroden 11 des magnetisch-induktiven Durchflussmessgerätes der Fig. 1 und der Erdungselektrode GND verglichen werden. Dafür wird eine übliche Messschaltung zur Bestimmung von Impedanzen benutzt.

Es ist jedoch auch möglich jeweils eine beliebige erste Impedanz und eine beliebige zweite Impedanz auf der Messstrecke zwischen E1, E2, EPD und/oder GND mittels der Messschaltung 8 zu ermitteln und zu vergleichen. Dies ist in Fig. 4 dargestellt.

In Fig. 5 ist eine vereinfachte Schaltungsanordnung einer bevorzugten Ausführungsvariante gezeigt. Die Schaltungsanordnung wird mit einer Spannung versorgt. Diese kann eine Frequenz, vorzugsweise allerdings mehrere Frequenzen, insbesondere drei Frequenzen, aufweisen.

Die Spannung wird über einen Vorwiderstand Rᵥₒᵣ zu einer der Elektroden E1, E2, GND oder EPD geführt. Die Impedanz wird im Fall der Fig. 5 stets gegenüber der Erdungselektrode GND ermittelt. Die Messstrecke zur Ermittlung der Impedanz ist also die Strecke zwischen der Erdungselektrode GND und einer der Elektroden E1, E2 oder EPD. Sodann werden zwei dieser Impedanzen in Verhältnis gesetzt und gegen einen Referenzwert gemessen.

## Patentansprüche

1. Verfahren zur Defekterkennung der Signalleitung (4) zwischen einer Elektrode (E1, E2, EPD, GND) und einer Mess- und/oder Auswerteeinheit (7) eines magnetisch-induktiven Durchflussmessgerätes (1), wobei das magnetisch-induktive Durchflussmessgerät (1) zumindest eine Mess- und/oder Auswerteeinheit (7), sowie ein Messrohr (2) mit zumindest zwei Messelektroden (E1, E2) und einer dritten Elektrode (EPD) aufweist, wobei das Verfahren zur Defekterkennung
**gekennzeichnet ist durch** die folgenden Schritte:
A) Ermittlung eines Verhältnisses von zumindest zwei gemessenen elektrischen Impedanzen (R_{E1}, R_{E2}, R_{EPD}) zwischen den Messelektroden (E1, E2) und/oder zwischen zumindest einer der beiden Messelektroden (E1 oder E2) und der dritten Elektrode (EPD);
B) Vergleich eines Verhältnisses (Rₓ/R_{y}) der in Schritt A gemessenen elektrischen Impedanzen (R_{E1}, R_{E2}, R_{EPD}) gegenüber einem Sollwertbereich; und
C) Ausgabe einer Defektmeldung, sofern das Impedanzverhältnis den Sollwertbereich über- oder unterschreitet,
wobei die dritte Elektrode eine Füllstandsüberwachungselektrode (EPD) ist, wobei die Messung der Impedanzen (R_{E1}, R_{E2}, R_{EPD}) gemäß Schritt A) durch Anlegen einer Spannung mit mehreren Frequenzen über einen Vorwiderstand (Rᵥₒᵣ) an eine Messstrecke bestehend aus zwei der vorgenannten Elektroden (E1, E2, EPD) erfolgt.

2. Verfahren zur Defekterkennung nach Anspruch 1, **dadurch gekennzeichnet, dass** der Sollwertbereich zwischen 0,2 und 5,0 liegt.

3. Verfahren zur Defekterkennung nach Anspruch 1 oder 2, **dadurch gekennzeichnet, dass** die Defektmeldung auf einen Kabelbruch hinweist sofern höchstens eine der Impedanzen (R_{E1}, R_{E2}, R_{EPD}) gegen annähernd unendlich tendiert.

4. Verfahren nach einem der vorhergehenden Ansprüche, **dadurch gekennzeichnet, dass** die dritte Elektrode als eine Erdungselektrode (GND) aufgebildet ist, mittels welcher ein Potentialausgleich des im Messrohr (2) geführten Messmediums mit der Umgebung durchgeführt wird.

5. Verfahren nach einem der vorhergehenden Ansprüche, **dadurch gekennzeichnet, dass** die dritte Elektrode als eine EPD-Elektrode (EPD) ausgebildet ist, mittels welcher die vollständige Befüllung des Messrohres (2) mit Messmedium während der Messung überwacht wird.

6. Verfahren nach einem der vorhergehenden Ansprüche, **dadurch gekennzeichnet, dass** Impedanzverhältnisse aus zumindest drei gemessenen Impedanzen (R_{E1}, R_{E2}, EPD und GND) zwischen jeder der Messelektroden (E1, E2) und der dritten Elektrode (GND oder EPD), sowie ggf. weiteren Elektroden, ermittelt und mit dem Sollwertbereich verglichen werden.

7. Verfahren nach einem der vorhergehenden Ansprüche, **dadurch gekennzeichnet, dass** das magnetisch-induktive Durchflussmessgerät (1) eine vierte Elektrode, insbesondere eine EPD-Elektrode oder eine Erdungselektrode, aufweist.

8. Verfahren nach einem der vorhergehenden Ansprüche **dadurch gekennzeichnet, dass** das magnetisch-induktive Durchflussmessgerät (1) zumindest zwei Messelektroden (E1, E2), eine EPD-Elektrode (EPD) und eine Erdungselektrode (GND) aufweist und zumindest drei Impedanzen zwischen jeweils einer von drei er vorgenannten Elektroden (E1, E2 oder EPD) und der vierten der vorgenannten Elektrode (GND) gemessen und durch Verhältnisbildung und Abgleich mit dem Sollwertebereich ausgewertet werden.

9. Magnetisch-induktives Durchflussmessgerät, **dadurch gekennzeichnet, dass** das magnetisch-induktive Durchflussmessgerät (1) einen Betriebsmodus aufweist, welcher nach einem Verfahren gemäß Anspruch 1 arbeitet.

## Claims

1. Method for fault detection of the signal cable (4) between an electrode (E1, E2, EPD, GND) and a measurement and/or evaluation unit (7) of an electromagnetic flowmeter (1), wherein the electromagnetic flowmeter (1) comprises at least a measurement and/or evaluation unit (7), as well as a measuring tube (2) with at least two measuring electrodes (E1, E2) and a third electrode (EPD), wherein said method for fault detection is **characterized by** the following steps:
A) Determination of a ratio of at least two measured electrical impedances (R_{E1}, R_{E2}, R_{EPD}) between the measuring electrodes (E1, E2) and/or between at least one of the two electrodes (E1 or E2) and the third electrode (EPD);
B) Comparison of a ratio (Rₓ, R_{y}) of the electrical impedances (R_{E1}, R_{E2}, R_{EPD}) measured in step A) with a target value range; and
C) Outputting of a defect message if the impedance ratio exceeds or drops below the target value range,
wherein the third electrode is a level monitoring electrode (EPD),
wherein the impedances (R_{E1}, R_{E2}, R_{EPD}) are measured in step A) by applying a voltage with several frequencies via a series resistor (Rᵥₒᵣ) to a measuring section consisting of two of the aforementioned electrodes (E1, E2, EPD).

2. Method for fault detection as claimed in Claim 1, **characterized in that** the target value range is between 0.2 and 0.5.

3. Method for fault detection as claimed in Claim 1 or 2, **characterized in that** the defect message indicates a cable breakage if at the very maximum one of the impedances (R_{E1}, R_{E2}, R_{EPD}) tends approximately towards infinity.

4. Method as claimed in one of the previous claims, **characterized in that** the third electrode is designed as a grounding electrode (GND) by means of which the potential equalization of the medium conducted in the measuring tube (2) with the environment is implemented.

5. Method as claimed in one of the previous claims, **characterized in that** the third electrode is designed as an EPD electrode (EPD) by means of which the complete filling of the measuring tube (2) with the medium is monitored during the measurement.

6. Method as claimed in one of the previous claims, **characterized in that** the impedance ratios from at least three measured impedances (R_{E1}, R_{E2}, EPD and GND) between each of the measuring electrodes (E1, E2) and the third electrode (GND or EPD), as well as other electrodes that may exist, are determined and compared against the target value range.

7. Method as claimed in one of the previous claims, **characterized in that** the electromagnetic flowmeter (1) comprises a fourth electrode, particularly an EPD electrode or a grounding electrode.

8. Method as claimed in one of the previous claims, **characterized in that** the electromagnetic flowmeter (1) comprises at least two measuring electrodes (E1, E2), one EPD electrode (EPD) and a grounding electrode (GND) and **in that** at least three impedances between each of the three aforementioned electrodes (E1, E2 or EPD) and the fourth aforementioned electrode (GND) are measured and evaluated by the ratio being calculated and compared against the target value range.

9. Electromagnetic flowmeter **characterized in that** the electromagnetic flowmeter (1) has an operating mode, which functions according to a method as claimed in Claim 1.

## Revendications

1. Procédé destiné à la détection de défauts du câble de signal (4) entre une électrode (E1, E2, EPD, GND) et une unité de mesure et/ou d'exploitation (7) d'un débitmètre magnéto-inductif (1), le débitmètre magnéto-inductif (1) comprenant au moins une unité de mesure et/ou d'exploitation (7), ainsi qu'un tube de mesure (2) avec au moins deux électrodes de mesure (E1, E2) et une troisième électrode (EPD), le procédé destiné à la détection de défauts étant **caractérisé par** les étapes suivantes :
A) Détermination d'un rapport d'au moins deux impédances électriques (R_{E1}, R_{E2}, R_{EPD}) mesurées entre les électrodes de mesure (E1, E2) et/ou entre au moins l'une des deux électrodes (E1 ou E2) et la troisième électrode (EPD) ;
B) Comparaison d'un rapport (Rₓ, R_{y}) des impédances électriques (R_{E1}, R_{E2}, R_{EPD}) mesurées dans l'étape A) avec une gamme de valeurs de consigne ; et
C) Sortie d'un message de défaut, dans la mesure où le rapport des impédances dépasse par excès ou par défaut la gamme de valeurs de consigne,
la troisième électrode étant une électrode de surveillance de niveau (EPD),
la mesure des impédances (R_{E1}, R_{E2}, R_{EPD}) selon l'étape A) étant effectuée par l'application d'une tension avec plusieurs fréquences via une résistance série (Rᵥₒᵣ) sur une section de mesure constituée de deux des électrodes (E1, E2, EPD) susmentionnées.

2. Procédé destiné à la détection de défauts selon la revendication 1, **caractérisé en ce que** la gamme de valeurs de consigne est comprise entre 0,2 et 0,5.

3. Procédé destiné à la détection de défauts selon la revendication 1 ou 2, **caractérisé en ce que** le message de défaut renvoie à une rupture de câble dans la mesure où au maximum l'une des impédances (R_{E1}, R_{E2}, R_{EPD}) tend approximativement vers l'infini.

4. Procédé selon l'une des revendications précédentes, **caractérisé en ce que** la troisième électrode est conçue en tant qu'électrode de mise à la terre (GND), au moyen de laquelle est effectuée une compensation de potentiel du produit guidé dans le tube de mesure (2) avec l'environnement.

5. Procédé selon l'une des revendications précédentes, **caractérisé en ce que** la troisième électrode est conçue en tant qu'électrode EPD (EPD), au moyen de laquelle le remplissage complet du tube de mesure (2) avec le produit est surveillé pendant la mesure.

6. Procédé selon l'une des revendications précédentes, **caractérisé en ce que** des rapports d'impédance pour au moins trois impédances mesurées (R_{E1}, R_{E2}, EPD et GND) entre chacune des électrodes de mesure (E1, E2) et la troisième électrode (GND ou EPD), ainsi que d'éventuelles autres électrodes, sont déterminés et comparés avec la gamme de valeurs de consigne.

7. Procédé selon l'une des revendications précédentes, **caractérisé en ce que** le débitmètre magnéto-inductif (1) comprend une quatrième électrode, notamment une électrode EPD ou une électrode de mise à la terre.

8. Procédé selon l'une des revendications précédentes, **caractérisé en ce que** le débitmètre magnéto-inductif (1) comprend au moins deux électrodes de mesure (E1, E2), une électrode EPD (EPD) et une électrode de mise à la terre (GND) et **en ce qu'**au moins trois impédances entre chacune des trois électrodes (E1, E2 ou EPD) susmentionnées et la quatrième électrode (GND) susmentionnée sont mesurées et évaluées par formation de rapports et comparaison avec la gamme de valeurs de consigne.

9. Débitmètre magnéto-inductif **caractérisé en ce que** le débitmètre magnéto-inductif (1) présente un mode de fonctionnement, lequel fonctionne d'après le procédé selon la revendication 1.
